# FASCICULE DE BREVET EUROPEEN

(11) **EP 2 636 000 B1**
(45) Date de publication et mention de la délivrance du brevet: **23.07.2014**
(21) Numéro de dépôt: 11778886.9
(22) Date de dépôt: 03.11.2011
(51) Int. Cl.: G06K 19/077

(54) **PROCEDE D'INTERCONNEXION PAR RESSORT DE PLAGE CONDUCTRICE AVEC UN CONTACT ELECTRIQUE ET DISPOSITIF CORRESPONDANT**
SPRING INTERCONNECTION METHOD OF A CONDUCTING SURFACE WITH AN ELECTRICAL CONTACT POINT AND CORRESPONDING DEVICE
FEDERVERBINDUNGSVERFAHREN VON EINER LEITFÄHIGEN ÖBERFLACHE MIT EINEM ELEKTRISCHEN KOKTAKTELEMENT UND ENTSPRECHENDE VORRICHTUNG

(30) Priorité: 04.11.2010 EP 10306209
(43) Date de publication de la demande: 11.09.2013
(73) Titulaire: Gemalto SA, 92190 Meudon (FR)
(72) Inventeur: BAJOLLE, Antoine, F-13390 Auriol (FR); SEBAN, Frédérick, F-13260 Cassis (FR); LEIBENGUTH, Joseph, F-92210 Saint-Cloud (FR); ROUSSEL, François, F-13390 Auriol (FR); FIDALGO, Jean-Christophe, F-13420 Gemenos (FR)
(86) Numéro de dépôt international: PCT/EP2011/069365
(87) Numéro de publication internationale: WO 2012/059557

(56) Documents cités:
- DE-A1- 19 749 650

## Description

### Domaine de l'invention.

L'invention concerne un procédé de réalisation d'une connexion électrique entre au moins une plage conductrice disposée dans un corps isolant et au moins un contact électrique disposé en regard de ladite plage conductrice électrique.

Elle vise en particulier les cartes à puce sans contact ou hybride (contact et sans contact).

L'invention vise à résoudre un problème de durabilité des connexions entre un module et une antenne disposée dans un corps de carte.

### Art antérieur.

La demande de brevet FR 2716281-A1 décrit un procédé de réalisation d'une carte à puce comprenant une étape de connexion d'un module de carte à puce ou d'une puce de circuit intégré à une antenne contenue dans un corps de carte. Différents moyens d'interconnexion utilisés comprennent notamment des matières conductrices, des lames ressort, des ressorts. Ces éléments sont disposés dans des cavités ou orifices s'étendant de la surface du corps jusqu'aux plages conductrices.

Les connexions sont réalisées avec de la colle conductrice que l'on dispose dans les cavités. Ces connexions ne sont pas suffisamment durables par rapport à des tests de flexion et/ou torsion de la carte plus contraignants notamment le secteur bancaire. En outre, avec de la colle conductrice, il y a une durée de polymérisation de la colle avant test ou utilisation. Le document DE 197 49 650 décrit l'usage d'un ressort hélicoïdal droit pour connecter un module à un élément conducteur dans un corps de carte.

D'autre part, il n'est pas pratique ou industriel de recourir à des ressorts qui seraient disposés dans les cavités ou orifices décrits précédemment. La mise en place de ressort hélicoïdal dans au moins un logement, pose un problème de manipulation, d'introduction dans leur logement, de positionnement et de maintien des ressorts dans les cavités jusqu'à l'étape de report, connexion et fixation de la puce ou du module au corps de carte.

Les cartes ne peuvent pas être manipulées à des cadences et avec les secousses imposées par les machines de production. Les ressorts sont susceptibles d'être éjectés au cours du déplacement de cartes et on peut assister alors à des rebuts de cartes pour cause d'absence de ressort dans le logement.

Pour éviter les inconvénients ci-dessus relatifs à des connexions électriques de type soudure ou avec de la matière conductrice, il existe des connexions sans contact notamment par couplage électromagnétique qui consistent à réaliser un module radiofréquence comportant une puce radiofréquence reliée à une antenne que l'on encarte dans un corps de carte contenant une antenne passive.

Une communication radiofréquence satisfaisant notamment l'ISO 14443 ou le standard NFC, est obtenue avec des spires d'antenne s'étendant sensiblement sur le pourtour périphérique du corps de carte. L'antenne passive est couplée de manière électromagnétique avec l'antenne du module. Cependant, il peut y avoir des problèmes de portée de la communication, les plages de contact métalliques étant susceptibles de former écran aux signaux radiofréquences.

L'invention vise à résoudre les inconvénients ci-dessus.

En particulier, l'invention vise un procédé de réalisation d'une fonction sans contact sur un dispositif à puce de circuit intégré et le cas échéant aussi une fonction à contact, qui soit résistant aux contraintes de torsion / flèxion et qui présente de bonnes performances en radiofréquence.

### Résumé de l'invention.

L'invention consiste dans son principe à retenir une connexion électrique par l'intermédiaire de ressorts et à les maintenir en place dans les cavités au moins au cours des transferts des cartes de poste à poste pendant la production sans compromettre leur faculté de compression et de liberté de mouvement dans une cavité ; Ces facultés sont indispensables à la réalisation d'un contact électrique et élastique de qualité durable. De préférence, les ressorts sont tronconiques ou pointus à leurs extrémités pour faciliter leur introduction dans un logement.

A cet effet, l'invention a pour objet un dispositif à puce de circuit intégré électronique comprenant un corps isolant contenant au moins une plage conductrice, au moins un contact électrique en regard de ladite plage conductrice électrique, au moins un logement dans le corps, comprenant un fond et une embouchure, ledit logement débouchant au fond sur la plage conductrice et débouchant à son embouchure sur le contact électrique, au moins un ressort hélicoïdal disposé dans le logement et raccordant la plage conductrice au contact électrique, ledit ressort comprenant une portion centrale (C) entre ses deux extrémités;

Le dispositif se distingue en ce que ledit logement et/ou ledit ressort sont configurés pour maintenir le ressort dans son logement par frottement de la partie centrale (C) du ressort par rapport à la paroi de son logement.

Selon l'invention, le dispositif comprend également d'autres caractéristiques conformes aux revendications 2 à 11.

L'invention a également pour objet le procédé conforme à la revendication 12.

### Description des figures :

- la figure 1 illustre, une carte à puce sans contact (en coupe transversale par le milieu du module de carte à puce), selon un mode de réalisation de l'invention;
- la figure 2 illustre, un agrandissement du ressort dans son logement de la figure précédente ;
- la figure 3 illustre le ressort tout seul de la figure précédente ;
- la figure 4 illustre un second mode de réalisation du dispositif d'interconnexion d'une plage conductrice avec un contact électrique, dans lequel le ressort est configuré avec une bague de centrage et/ou de maintien;
- la figure 5 illustre un troisième mode de réalisation du dispositif d'interconnexion d'une plage avec un contact électrique, dans lequel les ressorts sont configurés avec une plaque de centrage et/ou de maintien ;
- la figure 6 illustre un quatrième mode de réalisation du dispositif d'interconnexion d'une plage conductrice avec un contact électrique, dans lequel le logement lui-même est configuré pour centrer et/ou maintenir le ressort ;
- la figure 7 illustre une fraise adaptée à la réalisation de portions des logements de la figure précédente, notamment le fond ;
- la figure 8 illustre une fraise adaptée à la réalisation d'une portion des logements de la figure 7, notamment la paroi centrale et l'embouchure.

### Description détaillée des modes de réalisation.

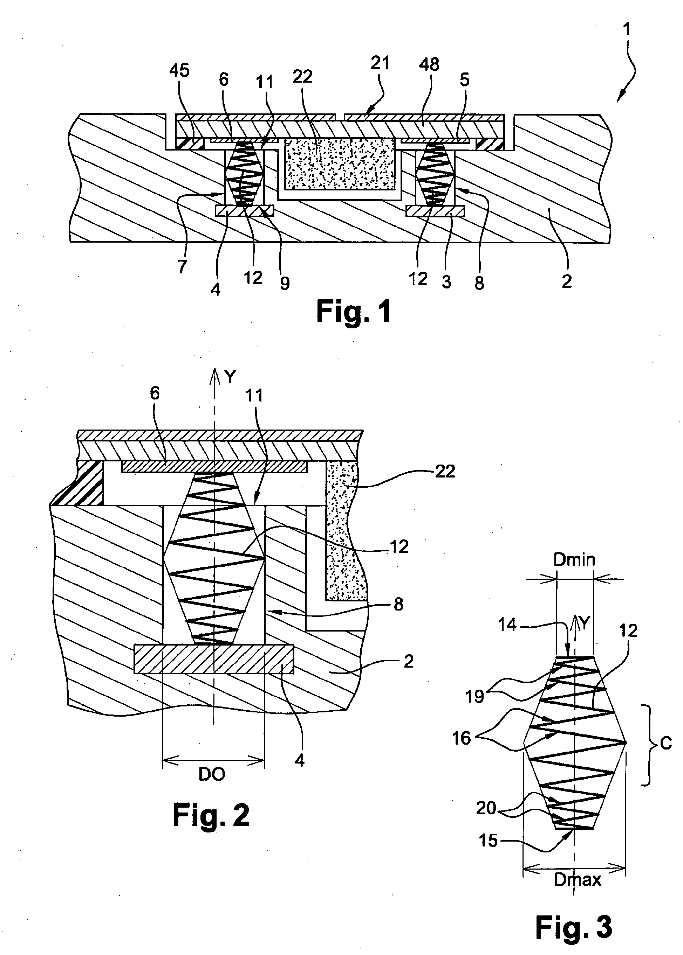

La figure 1 montre un dispositif conforme à un mode de réalisation de l'invention. Il comprend un corps isolant 2 contenant au moins une plage conductrice 3, 4, au moins un contact électrique 5, 6 en regard de ladite plage conductrice électrique, au moins un logement 7,8 dans le corps, comprenant un fond 9, 10 et une embouchure 11, ledit logement débouchant (ou accédant à) par son fond sur la plage conductrice 3, 4 et sur le contact électrique 5, 6 par son embouchure.

Le dispositif est ici une carte à puce de circuit intégré 1 de type sans-contact. La carte 1 comporte un corps de carte 2 en matière isolante notamment plastique. Le corps peut être obtenu par moulage ou par lamination à froid ou à chaud de plusieurs feuilles ou couches de matériaux avec ou sans adhésifs. Les contacts électriques et/ou les plages électriquement conductrices sont destinées à connecter une puce de circuit intégré logé dans le module.

Le cas échéant, les contacts électriques 5, 6 sont les plots d'une puce de circuit intégré ou composant électronique ou électrique tel que batterie, afficheur, capteur biométrique, clavier. Les plages conductrices 3, 4 peuvent être celles d'un circuit quelconque, tel qu'une antenne, capacité, composant électrique ou électronique, des plages reliées à des pistes de redirections.

Le dispositif peut être tout autre, notamment un passeport électronique, dès l'instant où des contacts électriques sous une surface principale d'un corps sont à connecter avec d'autres contacts à travers une cavité ou orifice.

Les plages conductrices représentent ici les portions terminales d'une antenne radiofréquence notamment bobinée conforme à l'ISO 14443, NFC ou de type UHF. L'antenne est reliée aux deux surfaces conductrices du module 21 via les ressorts 12 et le module comprend une puce de circuit intégré reliée aux contacts électriques 5, 6. Le module peut comprendre des plages de contact 46 en surface portées par un support diélectrique 48, pour communiquer électriquement avec un terminal à connecteur électrique.

Le dispositif comprend au moins un ressort hélicoïdal (de compression à spires non jointives) 12, 13 disposé dans le logement 7, 8 et raccordant la plage conductrice 3, 4 au contact électrique 5, 6.

Sur les figures 1 à 3, le ressort comprend une portion centrale C disposée entre ses deux extrémités 14, 15, des spires d'extrémités 19, 20 du ressort disposent d'un degré de liberté suivant un axe longitudinal Y du ressort pour permettre de compresser le ressort et assurer une force élastique de contact électrique contre les contacts à interconnecter.

Selon une caractéristique de l'invention, le dispositif comprend des moyens 8, 16 configurés pour faciliter la mise en place du ressort et /ou maintenir au moins par frottement la partie centrale C du ressort dans la cavité.

Selon un mode de réalisation, la section Dmin d'une extrémité 14, 15 du ressort est inférieure à celle D0 de l'embouchure du logement 7. Cela permet de faciliter l'introduction du ressort dans l'orifice de réception du ressort ou embouchure 11 du logement 7.

Dans l'exemple sur la figure 3, le ressort comprend deux portions comprenant des spires dont la section perpendiculaire à l'axe Y diminue de la partie centrale C vers ses deux extrémités. La portion centrale du ressort peut comprendre une à trois spires 16 plus grandes par rapport aux autres. Les spires centrales 16 ont une section ou un diamètre Dmax supérieur à la section ou au diamètre Dmin des extrémités 14, 15 du ressort.

Concernant la carte à puce, par exemple, les ressorts ont une longueur de 0,3 à 0,5 mm au repos, le diamètre maximal du ressort (Dmax) est environ compris entre 0,5 et 1 mm et le diamètre minimal (Dmin) est compris entre 0,4 et 0,8 mm. De préférence Dmin est inférieur de 10 à 50 % par rapport à Dmax.

La portion centrale du ressort coopère avec le logement pour maintenir le ressort dans le logement au moins par frottement avec la paroi du logement. LA section centrale est sensiblement égale ou légèrement supérieure pour comprimer les spires centrales radialement dans le logement (perpendiculairement à l'axe Y).

Ainsi, une fois le ressort introduit dans son logement, il ne s'échappe plus au cours des différentes manipulations du corps 2 avant de réaliser l'interconnexion avec des contacts électriques 5, 6, en l'occurrence par encartage du module 21 dans le corps de carte pour contenir définitivement les ressorts.

Alternativement, les formes relatives du logement et du ressort peuvent être inversées de manière à conserver la liberté de mouvement des spires aux extrémités. Le ressort peut alors être cylindrique tandis que le logement peut avoir une section au fond et à l'embouchure plus grande que le diamètre du ressort.

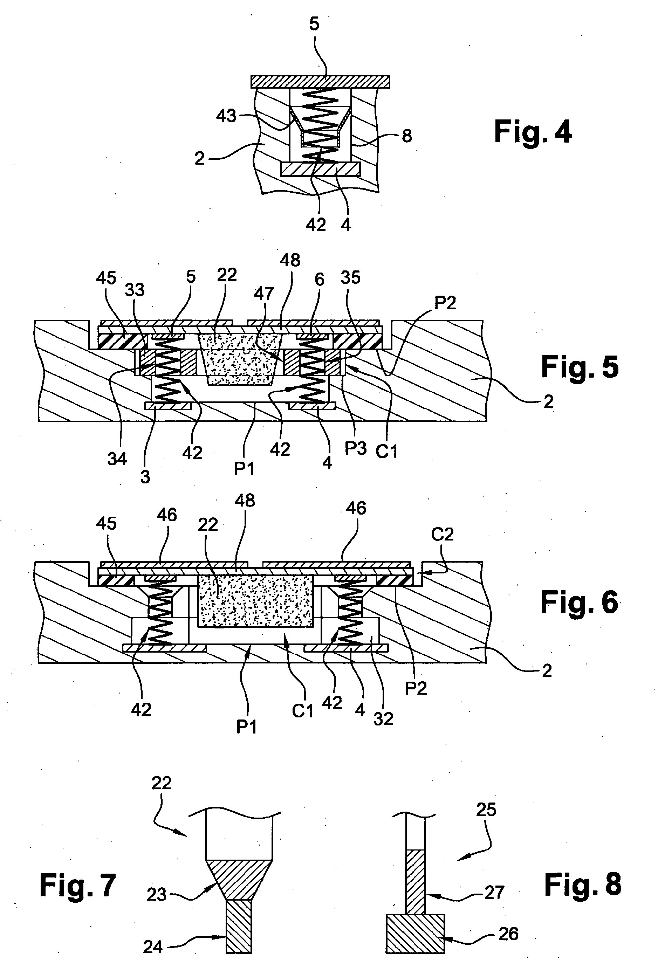

Selon un autre mode de réalisation à la figure 4, le logement 7 peut comprendre une section qui s'élargit en direction du fond et / ou de son embouchure à partir d'une section centrale du ressort ou du logement.

Selon un autre mode de réalisation, le dispositif peut comprendre un élément de maintien ou de centrage disposé autour du ressort et entre le ressort et la paroi du logement et sensiblement au niveau de la partie centrale.

L'élément en question peut consister en une bague ou une jupe 43, qui le cas échéant, peut être tronconique, pour faciliter l'introduction du ressort dedans et pour faciliter l'insertion de l'ensemble dans l'embouchure 11 du logement 8. Le logement est dans ce cas cylindrique de section plus grande que celle du ressort. La jupe est déformable lors de son introduction dans le logement.

Selon un autre mode de réalisation à la figure 5, l'élément de maintien ou de centrage 33 est une plaque qui reçoit au moins deux ressorts ; Elle est destinée à être disposée entre le plan des contacts électriques 5 et celui des plages conductrices 4.

L'élément de maintien ou de centrage peut comprendre un orifice central 47 de manière à y loger tout ou partie d'un composant et/ou son enrobage. Il peut comprendre une surface correspondant sensiblement à celle de la cavité C1. Des ressorts cylindriques ou comme ceux de la figure 1, peuvent être fixés d'abord sur une feuille 33 ou plaque support. La feuille ou plaque peut comporter deux orifices 34, 35 de réception des ressorts et un orifice central correspondant à l'enrobage 22 du module. La feuille est ensuite placée dans la cavité au niveau d'un plan intermédiaire P3 entre les plages conductrices et contacts électriques.

Le module est collé dans la cavité C1 avec un film thermo-fusible 45. Le module peut comporter ou non des plages de contact 46 en surface. Les orifices 35 de la plaque peuvent être coniques pour faciliter l'introduction des ressorts.

Alternativement, les ressorts sont ceux de la figure 3. L'avantage de cet élément est de réaliser un usinage des cavités plus rapidement et de placer les deux ressorts en même temps dans la cavité en une seule opération puisqu'ils sont pré-assemblés via une plaque de centrage.

On décrit maintenant en relation avec les figures 1, 4, 5, 6, le procédé de l'invention pour réaliser une connexion électrique entre au moins une plage conductrice disposée dans un corps isolant et au moins un contact électrique disposé en regard de ladite plage conductrice électrique.

Le procédé comprend les étapes de création dans le corps 2 d'un logement comprenant un fond et une embouchure. Le logement est destiné à permettre un accès de l'extérieur à la plage conductrice par l'embouchure du logement.

Le procédé comprend la mise en place d'au moins un ressort hélicoïdal 12, 42 dans au moins un logement 8, 35; Le ressort comprend une portion centrale (C) entre ses deux extrémités, des spires d'extrémités 19, 20 du ressort disposant d'un degré de liberté suivant l'axe longitudinal (Y) pour compresser le ressort ; Ensuite, on procède au report et raccordement de la plage conductrice 4 au contact électrique 5.

Le procédé selon l'invention comprend enfin une étape de configuration des ressorts et / ou des logements pour faciliter l'introduction du ressort et positionner fermement la partie centrale du ressort dans la cavité. Cette étape est mise en oeuvre avec des moyens de centrage différents ci-après illustrés aux figures.

Le mode décrit à la figure 1 a l'avantage de ne pas changer le procédé actuel de fabrication des cartes hybrides à l'exception d'une configuration particulière du ressort par rapport à leur logement. La forme du ressort comprend une forme doublement tronconique, la base des deux troncs de cône étant au niveau de la partie centrale.

La partie conique ou pointue du ressort facilite son introduction et sa mise en place dans son logement. Le contact électrique est concentré sur une surface plus petite à l'extrémité du ressort pour un meilleur contact.

Le ressort est symétrique en ayant une portion conique aux deux extrémités qui facilite sa manipulation et évite des erreurs d'orientation lors de sa préhension par des machines automatiques de report des ressorts dans leur logement.

A la figure 4, on ne change pas le mode opératoire actuel de fabrication d'une carte hybride mais on élargit les logements un peu plus que les ressorts et on utilise un élément de centrage et/ou de maintien 43 entre le ressort et la paroi du logement de ressort. Le ressort est ici configuré avec sa bague ou jupe de centrage. Le logement est configuré (élargi) au diamètre de la bague ou du moins légèrement inférieur (par exemple 1 à 10 %) pour un serrage doux.

A la figure 5, pour loger la plaque 33 ou feuille de centrage des ressorts, on réalise une cavité (C1) avec un plan P3. Les ressorts 42 sont configurés avec la plaque et cette dernière coopère avec la paroi de la cavité (C1) pour positionner les ressorts par rapport aux contacts et plages à interconnecter. On obtient une seule cavité à plusieurs étages P1, P2, P3 configurée pour recevoir au moins la plaque supportant les ressorts.

A la figure 6, le ressort a l'avantage d'être standard cylindrique et on configure le logement du ressort afin qu'il comprenne une partie élargie au fond et à l'embouchure. Pour réaliser la cavité, des étapes successives opératoires sont mises en oeuvre à l'aide des fraises spécifiques illustrées aux figures 7, 8.

Ainsi par exemple, on utilise une fraise 22 (fig.7) qui a une portion de révolution évasée 23 en direction de son axe de préhension pour former un dégagement ou un jeu autour des spires supérieures du ressort adjacentes au module ; Il comprend aussi une portion droite de révolution 24 sensiblement inférieure ou égale au diamètre du ressort pour former au moins la portion centrale C du ressort.

On utilise aussi une autre fraise (fig.8) qui comprend une portion d'extrémité de révolution 26 plus large que la section d'un ressort cylindrique et une portion droite 27 ayant une section légèrement inférieure à celle du ressort (par exemple inférieure de 10 %).

En opération, on réalise d'abord les plans P1 et P2 correspondant respectivement au fond de la cavité et plan de collage du module. Le plan P1 est sensiblement au niveau des plages conductrices 3, 4. Ensuite on amène la fraise 25 au niveau des plages conductrices, puis on la déplace latéralement jusqu'à coïncider l'axe de la fraise avec celle des logements de ressort pour former comme des oreilles (évidement 32 en vue de dessus) à la cavité.

Ensuite, la fraise 22 est utilisée au dessus de l'axe des logements vers le fond de la cavité (C1) jusqu'au niveau des plages conductrices pour former à la fois une portion centrale du logement et une embouchure évasée (conique) du logement. Ainsi, le ressort de forme standard peut être facilement introduit dans l'embouchure. En outre, il est maintenu en place par sa portion centrale qui correspond sensiblement à la section de la portion centrale du logement. On obtient une cavité qui communique avec les logements des ressorts.

Le ressort ne risque pas de s'échapper latéralement en direction de la cavité de la puce par l'évidement résultant de l'usinage de la portion 27 de la fraise 25 car le diamètre obtenu est inférieur à celui du ressort.

L'invention prévoit également des moyens conducteurs pour améliorer le contact électrique du ressort avec les éléments à raccorder électriquement. Le ressort peut comporter une soudure à l'une au moins de ses extrémités pour souder la plage conductrice et/ou le contact électrique. La soudure peut être effectuée à chaud notamment à l'étain / plomb ou à froid avec une matière ou colle conductrice éventuellement à polymérisation UV et retardateur ou non.

Pour une soudure à chaud, l'invention peut prévoir d'étamer chaque extrémité concernée par la soudure et /ou le cas échéant également la plage conductrice et/ou contact électrique concerné(s).

Chaque ressort est placé dans son logement et on obtient la soudure/brasure du ressort à la plage conductrice par apport d'énergie directement sur le ressort ou de la brasure notamment par un faisceau laser.

La soudure/brasure avec le contact électrique peut être obtenue par chauffage du contact par l'extérieur. S'agissant d'un module de carte à puce, la brasure peut s'effectuer par chauffage du module lors d'une phase d'encartage thermofusible et pressage à chaud du module.

Le cas échéant, les extrémités du ressort comportent un revêtement anticorrosion et bon conducteur comme par exemple l'or ou Nickel / or.

## Revendications

1. Dispositif à puce de circuit intégré comprenant :
- un corps isolant (2) contenant au moins une plage conductrice (3, 4),
- au moins un contact électrique (5, 6) en regard de ladite plage conductrice électrique,
- au moins un logement (7,8) dans le corps, comprenant un fond (9, 10) et une embouchure (11,12) ledit logement débouchant au fond sur la plage conductrice (3, 4) et à son embouchure, sur le contact électrique (5, 6),
- au moins un ressort hélicoïdal (12, 13) disposé dans le logement (7, 8) et raccordant la plage conductrice au contact électrique, ledit ressort comprenant une portion centrale (C) entre ses deux extrémités (14, 15),
**caractérisé en ce que** ledit logement et/ou ledit ressort sont configurés pour maintenir le ressort dans son logement par frottement de la partie centrale (C) du ressort par rapport à la paroi (8) de son logement.

2. Dispositif selon la revendication précédente, **caractérisé en ce que** la section (Dmin) d'une extrémité (14, 15) du ressort est inférieure à celle (D0) de l'embouchure du logement (7).

3. Dispositif selon l'une quelconque des revendications précédentes, **caractérisé en ce que** le ressort comprend deux portions tronconiques opposées par leur base qui est située au niveau d'une portion centrale (C) du ressort.

4. Dispositif selon la revendication précédente, **caractérisé en ce que** le logement (7) comprend une section transversale qui s'élargit en direction du fond et en direction de son embouchure à partir d'une section centrale (C).

5. Dispositif selon l'une quelconque des revendications précédentes, **caractérisé en ce que** le ressort comprend deux portions comprenant des spires dont la section diminue de la partie centrale (C) en direction de ses deux extrémités (14, 15).

6. Dispositif selon l'une quelconque des revendications précédentes, **caractérisé en ce qu'**il comprend un élément de maintien ou de centrage (43, 33) disposé autour du ressort (42) et entre le ressort et la paroi du logement et sensiblement au niveau de la portion centrale.

7. Dispositif selon l'une quelconque des revendications précédentes, **caractérisé en ce que** l'élément de maintien ou de centrage (33) reçoit au moins deux ressorts et correspondant sensiblement à celui d'un logement.

8. Dispositif selon l'une quelconque des revendications précédentes, **caractérisé en ce que** l'élément de maintien ou de centrage comprend un orifice (47) de manière à y loger tout ou partie d'un composant et/ou de son enrobage (22).

9. Dispositif selon l'une quelconque des revendications précédentes, **caractérisé en ce que** le ressort comporte une soudure à l'une au moins de ses extrémités pour souder la plage conductrice et/ou le contact électrique.

10. Dispositif électronique.selon l'une quelconque des revendications précédentes, **caractérisé en ce qu'**il comprend une antenne radiofréquence reliée aux deux plages conductrices (3, 4) et **en ce qu'**il comprend une puce de circuit intégré reliée aux contacts électriques (46).

11. Dispositif électronique selon l'une quelconque des revendications précédentes, **caractérisé en ce qu'**il constitue une carte à puce ou passeport électronique.

12. Procédé de réalisation d'une connexion électrique entre au moins une plage conductrice (3, 4) disposée dans un corps isolant et au moins un contact électrique (5, 6) d'un circuit intégré disposé en regard de ladite plage conductrice électrique,
- ledit procédé comprenant les étapes suivantes de création dans le corps (2) d'un logement (7, 8) comprenant un fond (9, P1) et une embouchure (11), ledit logement débouchant au fond sur la plage conductrice et débouchant sur le contact électrique à son embouchure,
- mise en place d'au moins un ressort hélicoïdal (12, 42) dans au moins un logement, ledit ressort comprenant une portion centrale (C) entre ses deux extrémités,
- report et raccordement de la plage conductrice au contact électrique,
**caractérisé en ce qu'**il comprend une étape de configuration du ressort et / ou de son logement pour maintenir le ressort dans son logement par frottement de la partie centrale (C) du ressort par rapport aux parois de son logement.

## Patentansprüche

1. Vorrichtung mit integriertem Leiterchip, umfassend:
- einen isolierenden Körper (2), der wenigstens einen leitenden Bereich (3, 4) umfasst,
- wenigstens einen elektronischen Kontakt (5, 6) gegenüber dem genannten elektrischen leitenden Bereich,
- wenigsten eine Aufnahme (7, 8) in dem Körper, die einen Boden (9, 10) und eine Mündung (11, 12) umfasst, wobei die genannte Aufnahme am Boden in den leitenden Bereich (3, 4) und an seiner Mündung in den elektrischen Kontakt (5, 6) mündet,
- wenigstens eine spiralförmige Feder (12, 13), die in der Aufnahme (7, 8) aufgenommen ist und den leitenden Bereich an den elektrischen Kontakt anschließt, wobei die genannte Feder einen zentralen Abschnitt (C) zwischen ihren beiden Enden (14, 15) umfasst,
**dadurch gekennzeichnet, dass** die genannte Aufnahme und / oder die genannte Feder konfiguriert sind, um die Feder durch Reibung des zentralen Teils (C) der Feder im Verhältnis zur Wand (8) ihrer Aufnahme in ihrer Aufnahme zu halten.

2. Vorrichtung gemäß dem voranstehenden Anspruch, **dadurch gekennzeichnet, dass** der Querschnitt (Dmin) eines Endes (14, 15) der Feder kleiner ist als der (D0) der Mündung der Aufnahme (7).

3. Vorrichtung gemäß einem der voranstehenden Ansprüche, **dadurch gekennzeichnet, dass** die Feder zwei durch ihre Basis gegenüberliegende kegelstumpfartige Abschnitte umfasst, die sich an einem zentralen Abschnitt (C) der Feder befindet.

4. Vorrichtung gemäß dem voranstehenden Anspruch, **dadurch gekennzeichnet, dass** die Aufnahme (7) einen transversalen Querschnitt umfasst, der sich in Richtung des Bodens und in Richtung seiner Mündung ausgehend von einem zentralen Querschnitt (C) erstreckt.

5. Vorrichtung gemäß einem der voranstehenden Ansprüche, **dadurch gekennzeichnet, dass** die Feder zwei Abschnitte umfasst, die Windungen umfassen, deren Querschnitt vom zentralen Teil (C) in Richtung ihrer beiden Enden (14, 15) abnimmt.

6. Vorrichtung gemäß einem der voranstehenden Ansprüche, **dadurch gekennzeichnet, dass** sie ein Halte- oder Zentrierungselement (43, 33) umfasst, das rund um die Feder (42) und zwischen der Feder und der Wand der Aufnahme und deutlich auf der Höhe des zentralen Abschnitts angeordnet ist.

7. Vorrichtung gemäß einem der voranstehenden Ansprüche, **dadurch gekennzeichnet, dass** das Halte- oder Zentrierungselement (33) wenigstens zwei Federn aufnimmt und deutlich dem einer Aufnahme entspricht.

8. Vorrichtung gemäß einem der voranstehenden Ansprüche, **dadurch gekennzeichnet, dass** das Halte- oder Zentrierungselement eine Öffnung (47) derart umfasst, dass darin eine Komponente und / oder ihre Beschichtung (22) ganz oder teilweise aufgenommen wird.

9. Vorrichtung gemäß einem der voranstehenden Ansprüche, **dadurch gekennzeichnet, dass** die Feder eine Schweißnaht an wenigstens einem ihrer Enden umfasst, um den leitenden Bereich und / oder den elektrischen Kontakt zu verschweißen.

10. Elektronische Vorrichtung gemäß einem der voranstehenden Ansprüche, **dadurch gekennzeichnet, dass** sie eine Funkfrequenzantenne umfasst, die an zwei leitende Bereiche (3, 4) angeschlossen ist, und dass sie einen integrierten Leiterchip umfasst, der an die elektrischen Kontakte (46) angeschlossen ist.

11. Elektronische Vorrichtung gemäß einem der voranstehenden Ansprüchen, **dadurch gekennzeichnet, dass** sie eine Chipkarte oder einen elektronischen Pass darstellt.

12. Ausführungsverfahren eines elektrischen Anschlusses zwischen wenigstens einem leitenden Bereich (3, 4), der in einem isolierenden Korpus angeordnet ist, und einem elektrischen Kontakt (5, 6) eines integrierten Schaltkreises, der gegenüber dem genannten elektrischen leitenden Bereich angeordnet ist,
- wobei das genannte Verfahren die folgenden Erstellungsstufen in dem Korpus (2) einer Aufnahme (7, 8) umfasst, die einen Boden (9, P1) und eine Mündung (11) umfasst, wobei die genannte Aufnahme in den Boden auf dem leitenden Bereich einmündet und auf dem elektrischen Kontakt in seiner Mündung einmündet,
- Einrichten wenigstens einer spiralförmigen Feder (12, 42) in wenigstens eine Aufnahme, wobei die genannte Feder einen zentralen Bereich (C) zwischen ihren zwei Enden umfasst,
- Übertrag und Anschluss des leitenden Bereichs an den elektrischen Kontakt,
**dadurch gekennzeichnet, dass** er eine Konfigurationsstufe der Feder und / oder ihrer Aufnahme umfasst, um die Feder per Reibung des zentralen Teils (C) der Feder im Verhältnis zu den Wänden ihrer Aufnahme in ihrer Aufnahme zu halten.

## Claims

1. Device with integrated circuit chip including:
- an insulating body (2) containing at least one conducting pad (3, 4),
- at least one electrical contact (5, 6) opposite said electric conducting pad,
- at least one recess (7, 8) in the body, including a bottom (9, 10) and an opening (11, 12), said recess connecting at the bottom to the conducting pad (3, 4) and, at the opening thereof, to the electrical contact (5, 6),
- at least one helical spring (12, 13) arranged in the recess (7, 8) and connecting the conducting pad to the electrical contact, said spring including a central portion (C) between the two ends (14, 15) thereof,
**characterised in that** said recess and/or said spring are configured such as to hold the spring in the recess thereof by friction of the central portion of the spring relative to the wall (8) of the recess thereof.

2. Device according to the preceding claim, **characterised in that** the section (Dmin) of one end (14, 15) of the spring is smaller than that (D0) of the opening of the recess (7).

3. Device according to any preceding claim, **characterised in that** the spring includes two frustoconical portions opposed by the base thereof, which is located at a central portion (C) of the spring.

4. Device according to the preceding claim, **characterised in that** the recess (7) includes a cross-section which increases towards the bottom and towards the opening thereof from a central section (C).

5. Device according to any preceding claim, **characterised in that** the spring includes two portions including coils in which the section decreases from the central portion (C) towards the two ends thereof (14, 15).

6. Device according to any preceding claim, **characterised by** including a holding or centring element (43, 33) arranged around the spring (42) and between the spring and the wall of the recess and substantially at the central portion.

7. Device according to any preceding claim, **characterised in that** the holding or centring element (33) receives at least two springs and substantially corresponds to that of a recess.

8. Device according to any preceding claim, **characterised in that** the holding or centring element includes an opening (47) for holding all or part of a component and/or of the coating (22) thereof.

9. Device according to any preceding claim, **characterised in that** the spring comprises a solder at least at one of the ends thereof for soldering the conducting pad and/or the electrical contact.

10. Electronic device according to any preceding claim, **characterised by** including a radiofrequency antenna connected to the two conducting pads (3, 4) and by including a built-in integrated circuit chip connected to the electrical contacts (46).

11. Electronic device according to any preceding claim, **characterised by** constituting a chip card or electronic passport.

12. Method for establishing an electrical connection between at least one conducting pad (3, 4) arranged in an insulating body and at least one electrical contact (5, 6) of an integrated circuit arranged opposite said electric conducting pad,
- said method including the steps of creating in the body (2) a recess (7, 8) including a bottom (9, P1) and an opening (11), said recess connecting at the bottom to the conducting pad and connecting to the electrical contact at the opening thereof,
- placing at least one helical spring (12, 42) in at least one recess, said spring including a central portion (C) between the two ends thereof,
- plotting and connecting the conducting pad to the electrical contact,
**characterised by** including a step of configuring the spring and/or the recess thereof such as to hold the spring in the recess thereof by friction of the central portion (C) of the spring relative to the walls of the recess thereof.
